# EUROPEAN PATENT SPECIFICATION

(11) **EP 0 731 725 B1**
(45) Date of publication and mention of the grant of the patent: **10.02.1999**
(21) Application number: 95904122.9
(22) Date of filing: 10.11.1994
(51) Int. Cl.: B01D 46/02, A47L 9/14, A47L 7/04

(54) **DEODORANT DISPENSER FOR VACUUM CLEANER**
DEODORANTDISPENSER FÜR STAUBSAUGER
DIFFUSEUR D'UN AGENT DE DESODORISATION POUR UN ASPIRATEUR

(30) Priority: 12.11.1993 US 152284
(43) Date of publication of application: 18.09.1996
(73) Proprietor: HOME CARE INDUSTRIES, INC., Clifton, NJ 07013 (US)
(72) Inventor: BOSSES, Mark, D., Montvale, NJ 07645 (US)
(74) Representative: Dixon, Donald Cossar
(86) International application number: PCT/US94/13526
(87) International publication number: WO 95/13126

(56) References cited:
- EP-A- 0 189 656
- EP-A- 0 317 658
- DE-C- 4 311 258
- GB-A- 1 094 832
- GB-A- 2 198 062
- US-A- 1 828 584
- US-A- 1 881 086
- US-A- 3 274 758
- US-A- 3 498 031
- US-A- 3 685 734
- US-A- 4 554 698
- US-A- 5 040 264
- US-A- 5 074 997

## Description

The present invention relates to replaceable vacuum cleaner bags and, more particularly, to a replaceable vacuum cleaner bag which optionally adds deodorant to the air passing therethrough.

Several products are available that allow the users of vacuum cleaners with disposable vacuum cleaner bags to add an active ingredient to the air which is filtered by their vacuum cleaners. Further examples include US-A-3274758 and US-A-4554698 which both disclose a porous bag with releasing means provided externally to cover an opening of the bag, the releasing means comprising an active ingredient and switchable associated means from a blocking release condition to an enabling release condition. In US-A-3274758, the releasing means is arranged so as to be automatically ruptured when the bag is placed in the vacuum cleaner. US-A-5040264 discloses a porous bag with a porous impregnated substrate located on an inside wall of the bag, for a continuous, non-controllable operation. The active ingredient is, broadly speaking, a deodorant. As used herein, the term "deodorant" includes true deodorants (which actually neutralize the offending smells), re-odorants (which do not actually neutralize the offensive smells, but rather add more acceptable fragrances into the air to mask the offending smells) and disinfectants (which through their antibacterial activities tend to eliminate the source of the offending smells).

Previous efforts to develop disposable vacuum cleaner bags which would dispense such active ingredients as deodorants into filtered effluents (such as the air passing through the vacuum cleaner) have apparently encountered at least two difficulties: the requirement that the effective action of the active ingredients must be sustained over extended periods of time (including store shelf storage prior to purchase and home storage prior to initial use), and the unacceptably high expenses involved in uniformly applying the requisite high saturation levels of expensive active ingredients.

From a commercial point of view, while most prospective customers will be attracted by the capability of dispensing an active ingredient such as a deodorant into the air passing through the vacuum cleaner, there are those who, at least at one time or another, as a matter of preference or for health reasons, would prefer not to release the active ingredient into the air. While the manufacturer of the bag could make two different bags - one which dispenses the active ingredient and another which does not - the economics of manufacturing two products versus one product and the competition for shelf space in the retail sales outlets suggest the advantages of a single product which will or will not dispense the active ingredient into the air, as desired by the ultimate user. In other words, despite the extra expense involved in adding to the air an active agent dispenser to each vacuum cleaner bag, it is more economical and makes better business sense to make a single product which affords the ultimate user the option of adding the active ingredient or not, as he/she wishes, than to have to manufacture, ship, and stock two different products, one with the dispenser and one without.

It is accordingly an object of the present invention to provide a disposable vacuum cleaner bag which, at the option of the ultimate user, either will or will not release an active agent into the air passing through the vacuum cleaner.

Another object is to provide such a bag which does not release the active agent until the decision of the ultimate consumer and therefore does not waste the active ingredient during storage prior to initial use (both prior to and after purchase).

According to the present invention there is provided a dust and dirt collecting apparatus for a vacuum cleaner, comprising:
(A) a porous bag defining an outer surface, a dust and dirt collecting enclosure and an air inlet;
(B) releasing means comprising an active agent thereon, for releasing the active agent into air passing from said air inlet and through said apparatus; and
(C) means associated with said releasing means, the associated means being switchable from a first condition blocking release of the active agent by said releasing means to a second condition enabling release of the active agent by said releasing means;
   characterised in that the releasing means comprise a porous substrate with the active agent thereon and that said releasing means is disposed on the outer surface of said bag.

In a preferred embodiment of the present invention, the releasing means has an outer surface, and said associated means is a strip having on an inner surface thereof a porous substrate releasably adhesively secured to said outer surface of said releasing means.

Advantageously, the active agent is located within air-tight microcapsules which are part of said releasing 2means and secured to said associated means such that switching of said associated means from said first condition to said second condition ruptures said microcapsules to release the active agent therefrom.

Preferably, said releasing means is disposed adjacent said bag air inlet.

Preferably again, the active agent is a deodorant.

The above and related objects, features, and advantages of the present invention will be more fully understood by reference to the following detailed description of the presently preferred, albeit illustrative, embodiments of the present invention when taken in conjunction with the accompanying drawings wherein:
Figure 1 is an isometric view of a disposable vacuum cleaner bag according to the present invention;

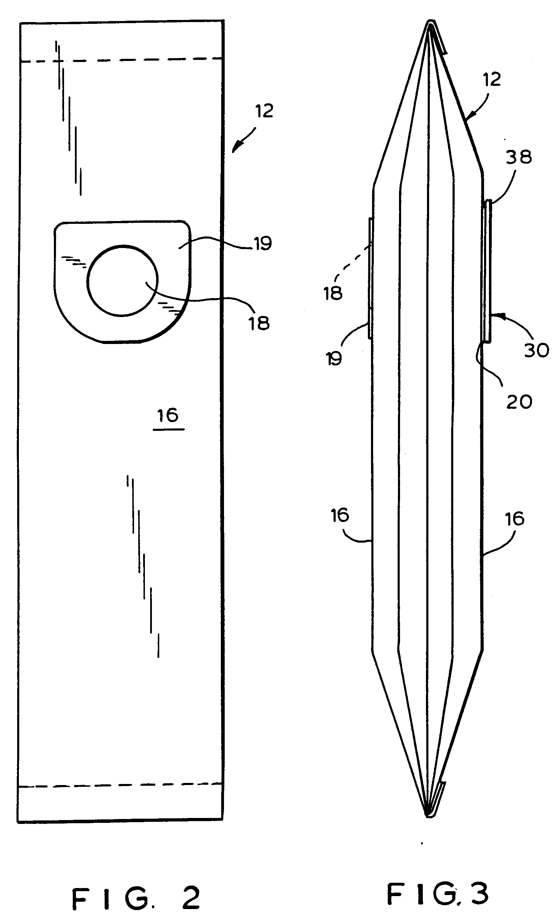

Figure 2 is a plan view of the front of a disposable vacuum cleaner bag of Figure 1;
Figure 3 is a plan view of the side of a disposable vacuum cleaner bag of Figure 1;

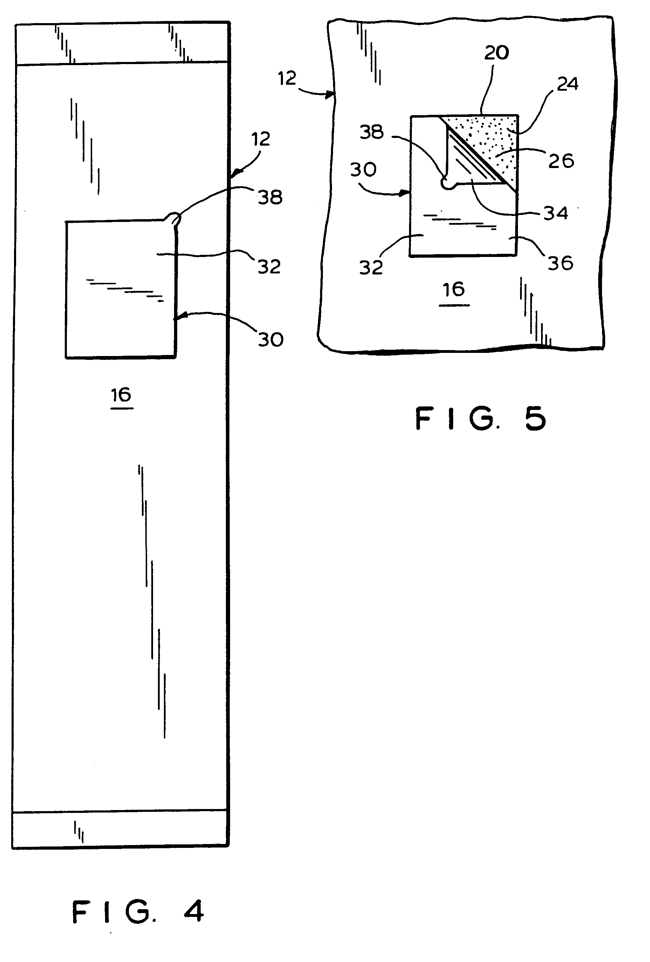

Figure 4 is a plan view of the back of a disposable vacuum cleaner bag of Figure 1;
Figure 5 is a detailed view of releasing means of a disposable vacuum cleaner bag of Figure 1.

Contemporary vacuum cleaners from a variety of manufacturers employ a variety of configurations of disposable filter paper vacuum cleaner bags with design configurations that will vary dependent on such factors as whether the vacuum cleaner employing the air-porous bag is an upright or canister style vacuum cleaner configuration, and, if an upright design, then whether the dust and dirt is top-filled into the bag or is blown up into the bag. Air containing this dust and dirt is directed into the interior of the bag through a tube which extends from the impeller of the vacuum cleaner. The pressure of the air injected into the bag from the tube is greater than atmospheric pressure, which causes the air in the bag's interior to escape as an effluent flow from the bag by passing through the porous filter material of the bag. The bag is retained by the tube by means of a restraining ring or other bag-positioning device. The pattern of pressures and rates of flow of air effluent from the bag will be contingent on a variety of factors, including: the amount of dirt retained in the bag; the air flow impedances or resistance imposed by the shape and size of the chamber of container in which the bag is retained; the design of the vacuum cleaner; the degree of coarseness and fibrous content of the dirt and other materials within the dust and dirt collecting enclosure inside the bag after it has been in use; the weight, thickness, and porosity of the filter paper material; and the pattern of construction of the bag itself.

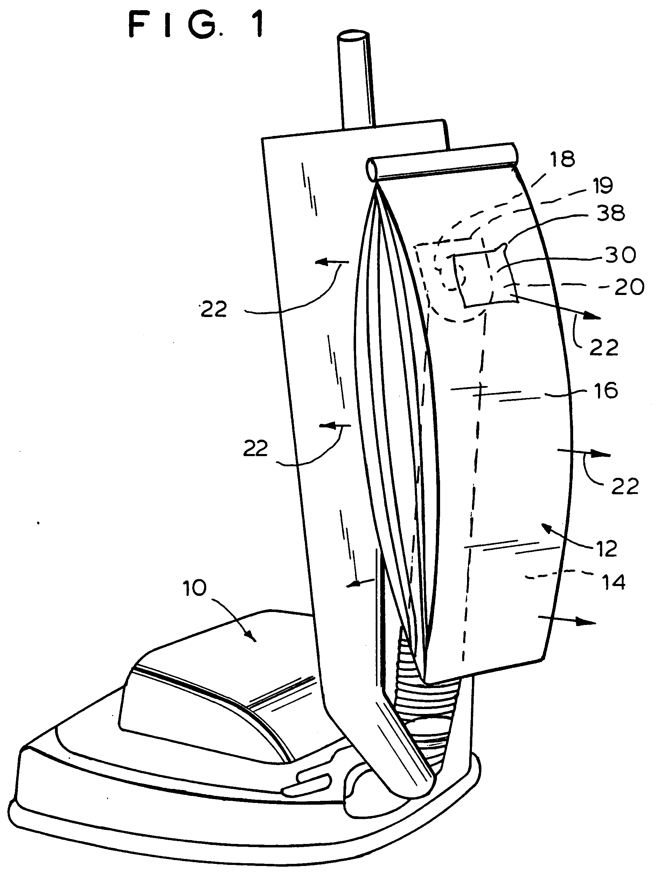

Referring now to the drawings, and in particular to Figure 1 thereof, therein illustrated is a dust and dirt collecting apparatus for a vacuum cleaner 10, according to the present invention, comprising a porous bag 12 defining a dust and dirt collecting enclosure 14. The bag 12 is preferably a disposable paper filter vacuum cleaner bag of one of the configurations described above, the bag 12 further defining the dust and dirt collecting enclosure 14 therewithin, an outer surface 16 therewithout and an air inlet 18 leading into the enclosure 14. A stiffener, such as cardboard, may be secured to bag 12 about the air inlet 18 to facilitate connection of the bag air inlet 18 to the vacuum cleaner 10.

Disposed on the bag outer surface 16 is a releasing means 20 for releasing an active agent into the air passing through the vacuum cleaner 10 (the air flow being indicated by arrows 22). The releasing means 20 typically comprises a porous substrate 24 having the active agent thereon or therein and an outer surface 26. The substrate 24 is preferably secured to the bag outer surface 16 by an adhesive (optimally a porous adhesive), sewing, or the like. Preferably the releasing means 20 is permanently secured to the bag outer surface 16 so that it cannot be separated therefrom, and may in fact form a part of the surface of the dust and dirt collecting enclosure 14. While the releasing means 20 may be disposed anywhere on the bag outer surface 16, it is preferably disposed adjacent the bag air inlet 18. In this manner, the air flow through the releasing means 20 does not diminish as the bag begins to fill with dust and dirt and, for reasons which will be apparent hereinafter, the releasing means 20 is in ready view of the ultimate user when he/she places the bag 12 in the vacuum cleaner 10.

An active ingredient is (or active ingredients are) released from the releasing means 20 into the effluent material which has passed therethrough. The active ingredient can be defined as a functional ingredient or an ingredient which is released from the material of the releasing means to perform some function. Thus, for example, when the active ingredient is used primarily to re-odorize or deodorize the air passing through the filter paper of a disposable vacuum cleaner bag, the active ingredients might comprise essential oils (such as pine oil, thyme oil or lemon oil), while necessary but secondary functions might call for inclusion of such ingredients as flame-retardant antioxidation agents to prevent spontaneous combustion of these oils (such as organic salts, ammonium sulfamate, zinc borate, antimony oxychlorendic anhydride, alumina trihydrate, organic phosphates and phosphonates), food preservative agents to prevent rancidification of the essential oils (such as calcium propionate, calcium disodium EDTA, sodium benzoate, sodium tripolyphosphate, sodium phosphate, citric acid, ascorbic acid, BHA, and BHT), anti-bacterial, bactericidal, or bacteriostatic agents to further retard the rancidification of the essential oils (such as phenolic compounds, alcohols, aldehydes such as formaldehyde, propionic and benzoic acids, halogenated compounds including chlorine, hypochlorite, and lodine, salts of such metals as copper and mercury, including organic mercurials, and surfactants like benzalkonium and cetylpyridinium), other stabilizers and extenders of the oils (such as dyes, drying oils like soybean and cottonseed, mineral oils such as dipropylene glycol, petrolatum and glycerine, and alcohols), or any compound or solution of these ingredients. An active ingredient might be a bacteriostatic or antibacterial disinfecting agent, such as pine oil or thyme oil, by itself.

It is a critical feature of the present invention that there be means, generally designated 30, functionally associated with the releasing means 20 and switchable from a first condition blocking release of the active agent by the releasing means 20 to a second condition enabling release of the active agent by the releasing means 20.

In a preferred embodiment of the present invention, the associated means 30 is a strip having a porous substrate 32 with an inner surface 34, and an outer surface 36, and a tab 38 to facilitate removal of strip 30 from the releasing means. In the first condition referenced above, except for tab 38 the inner surface 34 is releasably secured to the outer surface 26 of the releasing means 20. Thus even when the associated means 30 is in place on the releasing means 20 in order to prevent release of the active agent into the air passing through the vacuum cleaner 10, air from the bag enclosure 14 can pass through the releasing means 20 and associated means 30, so that there is no diminishment of the air flow capacity of the bag 12. The active ingredient is disposed on the releasing means substrate 24 as microcapsules. The microcapsules are part of the releasing means 20, but are also secured to the associated means 30 so that, when the associated means 30 is displaced from the releasing means 20 by the ultimate consumer (i.e., forced to assume the second condition referenced above), the microcapsules rupture and release the active ingredient in the air.

Microcapsules come in a wide variety of different configurations and sizes, including microtubules, microspheres, and the like, polymer inclusions, for example, as taught, by many patents of the 3M Company. The active agents most commonly encapsulated are inks and perfumes. Indeed, fragrance samplers included in magazines and the like typically include such microcapsules filled with scent and disposed intermediate a pair of opposing substrates, with different portions of each microcapsule being secured to each of the substrates so that, when the substrates are eventually separated by the reader, the microcapsules break and release the scent. For the purposes of the present invention, the substrates are preferably porous to air. There exists a wide variety of manufacturing techniques for creating such microcapsules secured to different substrates, for adjusting the force required to separate the substrates, for selecting the appropriate polymer materials for encapsulating particular active agents, etc. These techniques are well known in the micro-encapsulation art and hence need be set forth herein in further detail.

The associated means 30 may take any of a wide variety of different forms. For example, it may simply be a non-porous strip which is secured on or over a portion of the releasing means outer surface 26 so as to preclude, or at least minimize, air flow through the releasing means 20. When such non-porous associated means are disposed on or over the releasing means 20, there is little, if any, air flow through the releasing means 20 and hence no release of the active ingredient into the air. On the other hand, when the associated means 30 is removed from the releasing means 20 and its environment, air flow is enabled through the releasing means 20 so that the active ingredient enters the air passing through the vacuum cleaner 10. The disadvantage of this technique is that in the event the ultimate user does not wish to have the active ingredient enter the air flow, then the effectively porous surface area of the bag 12 has been diminished by the area occupied by the associated means 30. A further disadvantage of this technique is that the active agent escapes from the sides of the releasing means 20 due to the air pressure within the bag enclosure 14, thus providing some level of active agent in the air passing through the vacuum cleaner, albeit at a reduced level. On the other hand, this technique lends itself to reversibility with the associated means being replaceable over the releasing means 20, thereby affording the ultimate user the option to have the active ingredient in the air passing through the vacuum cleaner at selected times and not at other times.

## Claims

1. A dust and dirt collecting apparatus for a vacuum cleaner (10), comprising:
(A) a porous bag (12) defining an outer surface (16), a dust and dirt collecting enclosure (14) and an air inlet (18);
(B) releasing means (20) comprising an active agent thereon, for releasing the active agent into air passing (22) from said air inlet (18) and through said apparatus; and
(C) means associated (30) with said releasing means (20), the associated means (30) being switchable from a first condition blocking release of the active agent by said releasing means to a second condition enabling release of the active agent by said releasing means;
characterised in that the releasing means (20) comprise a porous substrate with the active agent thereon and that said releasing means (20) is disposed on the outer surface (16) of said bag (12).

2. A dust and dirt collecting apparatus as claimed in Claim 1, wherein said releasing means (20) has an outer surface (26), and said associated means (30) is a strip having on an inner surface (34) thereof a porous substrate (32) releasably adhesively secured to said outer surface (26) of said releasing means (20).

3. A dust and dirt collecting apparatus as claimed in Claim 1 or 2, wherein the active agent is located within air-tight microcapsules which are part of said releasing means (20) and secured to said associated means (30) such that switching of said associated means (30) from said first condition to said second condition ruptures said microcapsules to release the active agent therefrom.

4. A dust and dirt collecting apparatus as claimed in any preceding claim, wherein said releasing means is disposed adjacent said bag air inlet.

5. A dust and dirt collecting apparatus as claimed in any preceding claim, wherein the active agent is a deodorant.

## Patentansprüche

1. Staub- und Schmutz-Sammelvorrichtung für einen Staubsauger (10), mit:
(A) einem porösen Beutel (12) mit einer Außenfläche (16), einem Staub- und Schmutz-Sammelbehältnis (14) und einem Lufteinlaß (18);
(B) einer Abgabeeinrichtung (20) mit einem aktiven Mittel darauf, um das aktive Mittel in den Luftstrom (22) von dem Lufteinlaß (18) und durch die Vorrichtung abzugeben; und
(C) einer Einrichtung (30), die der Abgabeeinrichtung (20) zugehörig ist, wobei die zugehörige Einrichtung (30) von einem ersten Zustand, in dem die Abgabe des aktiven Mittels durch die Abgabeeinrichtung unterbrochen ist, in einen zweiten Zustand schaltbar ist, in dem die Abgabe des aktiven Mittels durch die Abgabeeinrichtung möglich ist;
dadurch gekennzeichnet, daß die Abgabeeinrichtung (20) einen porösen Träger mit dem aktiven Mittel darauf enthält und daß die Abgabeeinrichtung (20) auf der Außenfläche (16) des Beutels (12) angeordnet ist.

2. Staub- und Schmutz-Sammelvorrichtung nach Anspruch 1, bei der die Abgabeeinrichtung (20) eine Außenfläche (26) hat und die zugehörige Einrichtung (30) ein Streifen ist, der auf seiner Innenfläche (34) einen porösen Träger (32) hat, der abnehmbar an der Außenfläche (26) der Abgabeeinrichtung (20) festgeklebt ist.

3. Staub- und Schmutz-Sammelvorrichtung nach Anspruch 1 oder 2, bei der das aktive Mittel in luftdichten Mikrokapseln enthalten ist, die Teil der Abgabeeinrichtung (20) sind und die so an der zugehörigen Einrichtung (30) befestigt sind, daß die Mikrokapseln durch Umschalten der zugehörigen Einrichtung (30) von dem ersten Zustand in den zweiten Zustand beschädigt werden, um das aktive Mittel davon abzugeben.

4. Staub- und Schmutz-Sammelvorrichtung nach einem der vorhergehenden Ansprüche, bei der die Abgabeeinrichtung nahe dem Beutel-Lufteinlaß angeordnet ist.

5. Staub- und Schmutz-Sammelvorrichtung nach einem der vorhergehenden Ansprüche, bei dem das aktive Mittel ein Deodorant ist.

## Revendications

1. Appareil collecteur de poussières et de saletés pour un aspirateur (10), comprenant :
(A) un sac poreux (92) définissant une surface extérieure (16), une enceinte collectrice de poussières et de saletés (14) et une arrivée d'air (18) ;
(B) des moyens de libération (20) comprenant sur eux un agent actif pour libérer l'agent actif dans l'air passant (22) de ladite entrée d'air (18) à travers ledit appareil ; et
(C) des moyens associés (30) auxdits moyens de libération (20), les moyens associés (30) pouvant être commutés d'une première condition empêchant la libération de l'agent actif par lesdits moyens de libération à une deuxième condition permettant la libération de l'agent actif par lesdits moyens de libération,
caractérisé en ce que les moyens de libération (20) comprennent un substrat poreux avec l'agent actif sur lui et en ce que lesdits moyens de libération (20) sont disposés sur la surface extérieure (16) du sac (12).

2. Appareil collecteur de poussières et de saletés selon la revendication 1, dans lequel lesdits moyens de libération (20) ont une surface extérieure (26), et lesdits moyens associés (30) sont une bande ayant, sur une surface intérieure (34), un substrat poreux (32) fixé par adhésif de façon séparable sur la surface extérieure (26) desdits moyens de libération (20).

3. Appareil collecteur de poussières et de saletés selon la revendication 1 ou la revendication 2, dans lequel l'agent actif est situé à l'intérieur de micro-capsules étanches à l'air, qui font partie desdits moyens de libération (20) et qui sont fixées sur lesdits moyens associés (30), de telle sorte que la commutation desdits moyens associés (30) de la première condition à la deuxième condition brise lesdites micro-capsules pour en libérer l'agent actif.

4. Appareil collecteur de poussières et de saletés selon l'une des revendications précédentes, dans lequel lesdits moyens de libération sont disposés adjacents à ladite entrée d'air du sac.

5. Appareil collecteur de poussières et de saletés selon l'une des revendications précédentes, dans lequel l'agent actif est un désodorisant.
